# EUROPÄISCHE PATENTSCHRIFT

(11) **EP 1 339 126 B1**
(45) Veröffentlichungstag und Bekanntmachung des Hinweises auf die Patenterteilung: **14.07.2010**
(21) Anmeldenummer: 03002346.9
(22) Anmeldetag: 04.02.2003
(51) Int. Cl.: H01M 8/10, H01M 4/86, H01M 4/88, B01J 37/02, B01J 31/06, B01J 21/06

(54) **Katalysatorschicht, Verfahren zur Herstellung derselben und Verwendung einer solchen in einer Brennstoffzelle**
Catalytic layer, method for the fabrication thereof and the use of such a catalytic layer in a fuel cell
Couche catalytique, procédé pour sa fabrication et utilisation de cette couche catalytique dans une pile à combustible

(30) Priorität: 22.02.2002 DE 10207617
(43) Veröffentlichungstag der Anmeldung: 27.08.2003
(73) Patentinhaber: Forschungszentrum Jülich GmbH, 52425 Jülich (DE)
(72) Erfinder: Glüsen, Andreas, Dr., 40589 Düsseldorf (DE); Schonert, Morten, 31171 Nordstemmen (DE); Stolten, Detlef, Prof. Dr., 52076 Aachen-Walheim (DE)

(56) Entgegenhaltungen:
- EP-A2- 0 880 188
- EP-B1- 0 815 606
- GB-A- 1 163 479
- US-A- 5 523 181
- US-A1- 2001 028 975

## Beschreibung

Die Erfindung betrifft eine Katalysatorschicht, ein Verfahren zu dessen Herstellung sowie die Verwendung einer solchen Katalysatorschicht, insbesondere in einer Niedertemperatur-Brennstoffzelle.

### Stand der Technik

Die Membran-Elektroden-Einheit (MEA), die aus sandwichartig angeordneten Schichten Elektrode/Membran/Elektrode zusammengesetzt ist, stellt das zentrale Element einer Brennstoffzelle dar. Für Niedertemperatur-Brennstoffzellen, deren Betriebstemperaturen typischerweise 0 bis 150 °C betragen, werden ionenleitende Festelektrolyt-Membranen auf Polymerbasis verwendet. Die Anode für die Wasserstoffoxidation und die Kathode für die Sauerstoffreduktion sind vorwiegend mit Platin belegt. Die Anode ist im Fall der Methanoloxidation der Direkt-Methanol-Brennstoffzelle (DMFC) mit Platin-Ruthenium belegt. Die katalytisch aktive Schicht befindet sich danach an der Phasengrenze zwischen der Gasdiffusionsschicht und dem Polymerelektrolyten.

Die Aufbringung des Katalysators kann typischerweise auf zwei Arten erfolgen. Einerseits kann die Elektrode durch Auftragen einer dünnen Katalysatorschicht auf die Diffusionsschicht der Gasdiffusionselektrode aufgebracht werden. Andererseits kann die Katalysatorschicht auf die Membran aufgebracht werden. Weitere unterschiedliche Beschichtungsverfahren sind aus der Literatur bekannt.

Die meisten nach diesen vorgenannten Verfahren aufgebrachten katalytischen Schichten weisen eine Mischung aus einem Edelmetall, z. B. Platin, welches häufig auf einem Kohlenstoffträger aufgebracht ist, und einer Ionomerlösung. Das ionenleitfähigen Polymer, z. B. Nafion, fungiert u. a. als Bindemittel und ist notwendig, um die bei der katalytischen Oxidation von Methanol freiwerdenden Protonen zur ionenleitfähigen Membran zu leiten. Außerdem werden die entstehenden Elektronen über das Metall und den Kohlenstoff in der Katalysatorschicht über die Gasdiffusionsschicht zu den Stromkollektoren geleitet. Der optimale Anteil an ionenleitfähigem Polymer, z. B. Nafion, in der Katalysatorschicht hängt vom eingesetzten Katalysator, geträgert oder ungeträgert, ab und beträgt in der Regel für geträgerte Katalysatoren etwa 15 bis 40 Gew.-%, insbesondere 20 bis 35 %.

Beim geträgerten Katalysator sind die katalytisch aktiven Edelmetallpartikel auf Aktivkohlepartikeln aufgebracht. Hierdurch wird die katalytische Ausnutzung des Edelmetalls verbessert. Es sind jedoch dickere Schichtstärken notwendig, um eine gleiche Edelmetallbelegung wie bei ungeträgerten Katalysatoren zu erreichen. Diese dickeren Schichten neigen nachteilig zur Rissbildung und mechanischer Instabilität. Daher werden bislang jeweils mehrere dünne Schichten nacheinander aufgetragen und getrocknet, was das Herstellungsverfahren entsprechend aufwendig macht.

Es ist weiterhin bekannt, dass bei der Herstellung einer Katalysatorschicht neben dem Katalysator oder dem kohlenstoffgeträgerten Katalysator auch weitere polymere Additive oder Glyzerin als Bindemittel eingesetzt werden. Diese Zusätze verringern jedoch nachteilig die elektrochemische Leistungsfähigkeit des Katalysators, da sie regelmäßig an der Oberfläche des Katalysators adsorbieren.

Um die Katalysatorsuspension zu verarbeiten, z. B. durch Sprühen oder Rakeln, wird typischerweise zusätzlich 2-Propanol (Isopropanol) als Löse- bzw. Suspensionsmittel verwendet.

Aus US 5,523,181 ist bekannt, dass die Zugabe von feinverteiltem Siliziumdioxid als Partikel oder als Fäden eine Erniedrigung des spezifischen Widerstandes und eine Verbesserung der Ionenleitfähigkeit des Festelektrolyten durch erhöhten Wassergehalt bewirkt. Bei den in dieser Druckschrift genannten Siliziumdioxidzugaben handelt es sich um Siliziumdioxidpartikel mit einer Größe von weniger als 0,1 µm und um Siliziumdioxidfäden mit einem Durchmesser von 6 µm oder weniger. Zudem führt eine Zugabe der oben erwähnten Siliziumdioxidzugaben bei einer katalytisch beschichteten Kathode vorteilhaft zu einer Verringerung der Verdunstung des an der Kathode produzierten Produktwassers und verhindert bei einer katalytisch beschichteten Anode die Austrocknung der Membran.

In EP 0 812 606 B1 wird ferner eine BZ mit einer nicht-porösen Kationenaustauschmembran beschrieben, die als Separator dient. Diese Kationenaustauschmembran weist ein Polymer auf, welches Kationenaustauschgruppen besitzt, und einen darin dispergierten anorganischen Protonenleiter. Als Protonenleiter werden insbesondere Titandioxid, Zinn- und Wasserstoffmordenit, Oxide und Phosphate von Zirkonium und Mischungen davon eingesetzt. Der größte Teil der Membran ist im Wesentlichen frei von metallischen Katalysatoren.

### Aufgabe und Lösung

Aufgabe der Erfindung ist es, eine effektive und geeignete Katalysatorschicht, insbesondere für einen Einsatz in einer Brennstoffzelle, zur Verfügung zu stellen, welche eine ausreichende mechanische Stabilität auch bei größerer Schichtdicke aufweist als bislang nach dem vorgenannten Stand der Technik bekannt ist, und bei der eine unerwünschte Rissbildung während oder nach der Herstellungs-bedingten Trocknung vermieden wird. Weiterhin ist es die Aufgabe dieser Erfindung, ein Verfahren für die Herstellung einer entsprechenden Katalysatorschicht zu schaffen. Eine weitere Aufgabe ist es, eine Niedertemperatur-Brennstoffzelle zu schaffen, die wenigstens eine erfindungsgemäße verbesserte Katalysatorschicht aufweist.

Die Aufgaben der Erfindung werden gelöst durch eine Katalysatorschicht mit der Gesamtheit der Merkmale des Hauptanspruchs, sowie durch ein Herstellungsverfahren mit der Gesamtheit der Merkmale gemäß Nebenanspruch. Ferner wird die Aufgabe der Erfindung gelöst durch die Verwendung der Katalysatorschicht in einer Brennstoffzelle gemäß der Nebenansprüche 13 und 14. Vorteilhafte Ausführungsformen der Katalysatorschicht oder des Verfahrens finden sich in den jeweils rückbezogenen Ansprüchen.

### Gegenstand der Erfindung

Die erfindungsgemäße Katalysatorschicht nach Anspruch 1 umfasst ionenleitendes Polymer und Katalysatorteilchen. Zusätzlich weist die Katalysatorschicht anorganische Feststoffpartikel auf, die wenigstens doppelt so groß wie die Katalysatorteilchen und kleiner als die Schichtdicke der Katalysatorschicht sind.
Unter Katalysatorteilchen sind dabei nicht nur Teilchen aus reinem Katalysator, beispielsweise Edelmetallen, zu verstehen, sondern auch geträgertes Katalysatormaterial, welches insbesondere schon fertig auf dem Markt erhältlich ist. Dazu gehört beispielsweise Kohlenstoff geträgertes Katalysatormaterial, wie zum Beispiel das handelsübliche "Hi-SPEC" der Fa. Johnson-Matthey oder auch "E-TEK".
Neben diesen reinen oder auch geträgerten Katalysatorteilchen enthält die erfindungsgemäße Katalysatorschicht zusätzliche Feststoffpartikel in einer bestimmten Größe. Diese Partikel verhindern beim Herstellungsprozess eine Schwindung beim Trocknen. Sie verbessern so vorteilhaft den Zusammenhalt der Schicht und verhindern gleichzeitig Risse oder Spannungen innerhalb der Katalysatorschicht. Die Feststoffpartikel selbst sind inert und reagieren mit den übrigen Bestandteilen der Katalysatorschicht, auch während des Herstellungsprozesses, nicht. Da sie selbst unter Betriebsbedingungen nicht an den elektrochemischen Reaktionen teilnehmen, beeinflussen sie die katalytische Aktivität der Katalysatorschicht auch nicht.
Überraschenderweise wurde durch die Zugabe an Feststoffpartikeln in der erfindungsgemäßen Katalysatorschicht neben der mechanischen Verbesserung teilweise auch eine Verbesserung der Leistungsfähigkeit beobachtet. Dies betrifft insbesondere die elektrische Leitfähigkeit und das Wasserrückhaltevermögen.
Eine typische Zusammensetzung der erfindungsgemäßen Katalysatorschicht umfasst beispielsweise 15 - 40 Gew.-% an ionenleitfäigem Polymer, insbesondere Nafion, 50 - 75 Gew.-% an geträgertem Katalysator und 10 - 35 Gew.-% an zusätzlichen anorganischen Feststoffen. Eine weitere typische Zusammensetzung der erfindungsgemäßen Katalysatorschicht umfasst beispielsweise 0 - 20 Gew.-% an ionenleitfähigem Polymer, insbesondere Nafion, 40 - 90 Gew.-% an ungeträgerten Katalysatorteilchen und 10 - 40 Gew.-% an zusätzlichen anorganischen Feststoffen.
Als Katalysatorträgermaterial eignet sich insbesondere Aktivkohle. Viele im Handel erhältliche Katalysatormaterialien sind schon geträgert erhältlich, wobei der Anteil an reinem Katalysator dabei von 5 bis 95 % reichen kann. Als Katalysatorteilchen kommen neben Platin auch vorteilhaft Ruthenium/Platinmischungen in Frage, je nachdem, welche chemische Reaktion katalysiert werden soll.
Weiterhin weist die Katalysatorschicht einen zusätzlichen anorganischen Feststoff mit einem Gehalt von vorteilhaft 10 - 40 Gew.-%, insbesondere auch einem Gehalt von 15 - 35 Gew.-% auf.
Die Partikelgröße des anorganischen Feststoffs liegt vorteilhaft im Bereich von 0,1 µm und 100 µm, insbesondere einer Größe zwischen 0,25 µm und 50 µm. Um ihre vorteilhafte mechanische Wirkung zu erzielen sind sie aber in jedem Fall wenigstens doppelt so groß wie die Dicke der eingesetzten Katalysatorteilchen. Die maximale Partikelgröße wird durch die Dicke der vorliegenden Katalysatorschicht begrenzt und sollte diese nicht überschreiten. Bei den vorgenannten Größenordnungen handelt es sich ausdrücklich nicht um exakte Größenangaben aller zusätzlichen anorganischen Feststoffpartikel, sondern kennzeichnet üblicherweise den Mittelwert einer Größenverteilungskurve, in der diese Materialien typischerweise im Handel angeboten werden. Daher können auch identische Materialien mit im Prinzip identischer Größenangaben, aufgrund von unterschiedlichen Größenverteilungen, unterschiedliche Ergebnisse hinsichtlich ihrer mechanischen Stabilität und ihrer elektrochemischen Leistung bewirken. Ein Fachmann ist daher gehalten, zur Erzielung einer bestimmten Erfolge, verschiedene handelsübliche Materialien auf ihre Wirksamkeit hin zu testen.
Als geeignete anorganische Feststoffe haben sich Oxide, Nitride, Carbide, Silizide, Graphit oder auch Zeolithe erwiesen. Insbesondere die Zugabe von Siliziumdioxid mit einer mittleren Partikelgröße von mehr als 1 µm zeigten sehr gute Eigenschaften bezüglich der mechanischen Stabilität der Katalysatorschicht. Auch Mischungen dieser Materialien sind als Zusatz für die Katalysatorschicht geeignet.

Bei dem Verfahren zur Herstellung einer erfindungsgemäßen Katalysatorschicht auf einem Substrat gemäß Nebenanspruch sind die folgenden Schritte maßgeblich. Eine Mischung aus geträgerten oder ungeträgerten Katalysatorteilchen, einem Ionomer, bzw. einer Ionomerlösung, und zusätzlichem anorganischem Feststoff wird in einem Lösungsmittel suspendiert, und auf das Substrat aufgebracht. Die Suspension wird getrocknet und bildet dabei die Katalysatorschicht aus.
Als Trägermaterial für Edelmetallkatalysatoren hat sich insbesondere Kohlenstoff in Form von Aktivkohle bewährt. Die Trägerteilchen weisen üblicherweise eine Größe von ca. 50 nm. Der eingesetzte Katalysator besteht im Fall für eine Reaktion einer Direkt-Methanol-Umsetzung typischerweise aus einer Platin-/Ruthenium-Mischung. Vorteilhafte Mischungen weisen dabei ein Atomverhältnis von 1:1 auf. Der Anteil an reinem Katalysator, bezogen auf den geträgerten Katalysator, beträgt in der Regel zwischen 10 und 60 Gew.-%. Im Handel erhältlich sind beispielsweise geträgerte Katalysatorteilchen mit einem Anteil von 10, 20, 30, 40 und 60 Gew.-% Pt/Ru-Katalysator.
Als Ionomer, bzw. als Ionomerlösung, wird typischerweise eine Nafion©-Lösung verwendet, die einen Nation©-Gehalt von ca. 15 Gew.-% aufweist und ein Äquivalentgewicht (EW) von 1100. Als Lösungsmittel für das Ionomer können Wasser und/oder niedrige aliphatische Alkohole (regelmäßig bis C5) eingesetzt werden. Als Suspensionsmittel wird zusätzlich 2-Propanol verwendet. Für diese Zwecke geeignete Ionomerlösungen sind im Handel erhältlich.
Bei den zusätzlichen anorganischen Feststoffpartikeln handelt es sich um kleine Partikel, die den mechanischen Zusammenhalt der Katalysatorschicht erhöhen, und so regelmäßig eine Rissbildung während oder nach der Trocknung verhindern. Die eingesetzten Feststoffpartikel weisen typischerweise eine Größe zwischen 0,1 µm und 100 µm, insbesondere einer Größe zwischen 0,25 µm und 50 µm auf. Sie werden vorteilhaft so ausgewählt, dass sie mindestens doppelt so groß wie die eingesetzten geträgerten oder ungeträgerten Katalysatorpartikel und kleiner als die resultierende Katalysatorschichtdicke sind. Das bedeutet beispielsweise, bei eingesetzten Katalysatorpartikeln mit einer typischen Größe von 5 nm auf Trägerpartikeln von ca. 50 nm und einer beabsichtigten Schichtdicke von 80 µm, werden die zusätzlichen Feststoffpartikel regelmäßig in einer Größe zwischen 0,1 und 70 µm verwendet.
Die Feststoffpartikel sind selbst inert und nehmen an keiner chemischen Reaktion, insbesondere nicht an der katalysierten Reaktion, teil. Folgende Materialien haben sich als besonders geeignet herausgestellt: Graphit, Zeolith, Titanoxid und Siliziumdioxid, jeweils in unterschiedlichen Größen. Es wurde gefunden, dass die Wirkungsweise der Feststoffpartikel je nach Spezifikation des Herstellers leicht unterschiedlich ausfällt. Dabei ist u. a. die Partikelgrößenyerteilung ausschlaggebend.

Vorteilhaft werden die erfindungsgemäßen Katalysatorschichten in Niedertemperatur-Brennstoffzellen verwendet. Dabei können sowohl nur eine der zwischen Elektrode und Elektrolyt vorgesehenen Katalysatorschichten, als auch beide als erfindungsgemäße Katalysatorschichten ausgestaltet sein. Durch das einfache Herstellungsverfahren sind die genannten Katalysatorschichten regelmäßig besonders preisgünstig. Durch die besondere Stabilität und Modifikationsmöglichkeit sind sie insbesondere für den Einsatz in Brennstoffzellen geeignet, die häufig eine Anpassung der beteiligten Bauteile an jeweils einzustellenden Rahmenbedingungen des Betriebs erfordern.

### Spezieller Beschreibungsteil

Nachfolgend wird der Gegenstand der Erfindung anhand von ausgesuchten Ausführungsbeispielen näher erläutert, ohne dass der Gegenstand der Erfindung dadurch beschränkt werden soll.
Es wurden Untersuchungen an Substraten mit einer aufgebrachten erfindungsgemäßen Katalysatorschicht vorgenommen. Die Schichtdicke betrug in der Regel ca. 50 µm und wurde in einem Verfahrensschritt aufgebracht. Bei dem Vergleichsaufbau wurde die Tinte ohne die Additive (zusätzliche anorganische Feststoffpartikel) aufgebracht.

Die Herstellung der erfindungsgemäßen Katalysatorschichten erfolgt immer durch identische Arbeitsschritte. Zuerst wird das Additiv (zusätzlicher Feststoff) abgemessen bzw. abgewogen. Nacheinander werden die Nafion©-Lösung, 2-Propanol und der geträgerte Katalysator hinzugefügt. Die Suspension wird geschüttelt und anschließend 10 min in einem Ultraschallbad behandelt. Danach wird sie 3 min mit Hilfe eines Ultra-Turrax suspendiert. Die Verarbeitung durch Sprühen und Rakeln findet direkt im Anschluß statt. Die nachfolgende Tabelle 1 zeigt die als zusätzliche Feststoffpartikel (Additive) eingesetzten Materialien.

**Tabelle 1:Materialien der eingesetzten Additive**

| Additive | | chem. Formel | Partikelgröe [µm] |
|---|---|---|---|
| a) | Molekularsieb 4Å, Zeolith | | < 5 |
| b) | Titan(IV)oxid | TiO₂ | < 5 |
| c) | Graphit | C | 1 - 2 |
| d) | Graphit | C | ca. 44 |
| e) | Silica Gel | SiO₂ | 5 - 25 |
| f) | Silica colloidal (Syston HT-50) | SiO₂ | 0,04 - 0,045 |
| g) | Silica colloidal (Ludox TM50) | SiO₂ | 0,029 |

Als weitere zusätzliche Feststoffe sind beispielsweise auch Nitride oder Carbide geeignet. Die Größe der zusätzlich beigefügten Feststoffpartikel sollte vorteilhaft zwischen 20 nm und 100 µm liegen, aber auf jeden Fall kleiner als die beabsichtigte Schichtdicke der fertigen Katalysatorschicht sein. Besonders gute Ergebnisse wurden regelmäßig mit Feststoffpartikeln erzielt, deren Größen zwischen 250 nm und 50 µm liegen.

In der folgenden Tabelle sind beispielhaft für die unterschiedlichen Additivkonzentrationen die dazugehörigen Konzentrationen an Nafion, Edelmetall und Aktivkohle aufgeführt. Die Zusammensetzung einer Referenzschicht (0 % Additiv) ist ebenfalls angegeben.

**Tabelle 2: Zusammensetzung der untersuchten Katalysatoransätze**

| Additive (zusätzliche anor. Feststoffpartikel) | | Zusammensetzung: | | | |
|---|---|---|---|---|---|
| | | Additiv Gew.-% | Nation© Gew.-% | Edelmetall Gew.-% | Aktivkohle Gew.-% |
| | Referenz | 0 | 23 | 31 | 46 |
| a) | Molekularsieb | 19 | 21 | 24 | 36 |
| b) | Titandioxid | 19 | 21 | 24 | 36 |
| c) | Graphit | 13 | 23 | 26 | 39 |
| | | 19 | 21 | 24 | 36 |
| | | 25 | 22 | 21 | 32 |
| d) | Graphit | 19 | 21 | 24 | 36 |
| e) | Silica Gel | 13 | 23 | 26 | 39 |
| | | 19 | 21 | 24 | 36 |
| | | 25 | 22 | 21 | 32 |
| f) | Silica colloidal | 12 | 24 | 26 | 39 |
| | | 19 | 21 | 24 | 36 |
| | | 28 | 22 | 20 | 30 |
| g) | Silica colloidal | 12 | 24 | 26 | 39 |
| | | 19 | 21 | 24 | 36 |
| | | 28 | 21 | 20 | 30 |

Die angegebenen Zusammensetzungen für die Katalysatorschicht wurden auf einem Glaskohlenstoff aufgebracht und unter vergleichbaren Bedingungen auf ihre Fähigkeit zur Methanoloxidation hin untersucht. Es wurden Katalysatorschichten mit zwei verschiedenen Schichtdicken hergestellt, die nass ca. 50 µm und 150 µm betrugen und beim Trocknen dünner ausfielen. Neben den elektrochemischen Eigenschaften wurde zusätzlich auch eine optische und mechanische Untersuchung der Festigkeit der Katalysatorschicht vorgenommen. Dies kann beispielsweise durch Ritzen der aufgebrachten Schicht mit einem Skalpell erfolgen.

Bezogen auf die Katalysatormenge in der Referenzschicht, bei der keine Zugabe an anorganischen Feststoffen erfolgte, konnte bei den untersuchten Katalysatorschichten regelmäßig eine Verbesserung der elektrochemischen Leistung erzielt werden. Die mechanische Stabilität wurde ebenfalls durch die Zugabe der Additive verbessert. Bei einigen Additiven durchliefen die untersuchten Eigenschaften im betrachteten Konzentrationsbereich ein Maximum.
Neben der verbesserten Stabilität können die zugesetzten anorganischen Feststoffpartikel aufgrund ihrer chemischen Eigenschaften auch zur Modifikation der Katalysatorschicht beitragen. Die zusätzlichen anorganischen Feststoffpartikel können vorteilhaft auch die Hydrophilie oder Hydrophobie einer Katalysatorschicht beeinflussen. Durch eine geeignete Kombination an zugesetzten anorganischen Feststoffpartikeln ist eine zusätzliche Modifikation der Katalysatorschicht an die Anforderungen innerhalb einer Brennstoffzelle somit möglich.

## Patentansprüche

1. Katalysatorschicht, umfassend ionenleitfähiges Polymer und reine oder geträgerte Katalysatorteilchen, **gekennzeichnet durch**
zusätzliche anorganische Feststoffe, die wenigstens doppelt so groß wie die Katalysatorteilchen und kleiner als die Schichtdicke der Katalysatorschicht sind.

2. Katalysatorschicht nach vorhergehendem Anspruch 1, umfassend bis zu 20 Gew.-% ionenleitfähiges Polymer, 40 bis 90 Gew.-% reine Katalysatorteilchen und 10 bis 45 Gew.-% zusätzliche anorganische Feststoffe.

3. Katalysatorschicht nach vorhergehendem Anspruch 1, umfassend 15 bis 40 Gew.-% ionenleitfähiges. Polymer, 50 bis 75 Gew.-% geträgerte Katalysatorteilchen und 10 bis 40 % Gew.-% zusätzliche anorganische Feststoffe.

4. Katalysatorschicht nach einem der Ansprüche 1 bis 3, mit einem Gehalt an zusätzlichen anorganischen Feststoffen von 15 bis 25 Gew.-%.

5. Katalysatorschicht nach einem der Ansprüche 1 bis 4, bei dem die zusätzlichen anorganischen Feststoffe eine Größe zwischen 0,1 µm und 100 µm, insbesondere eine Größe zwischen 0,25 µm und 50 µm aufweisen.

6. Katalysatorschicht nach einem der Ansprüche 1 bis 5, mit wenigstens einem zusätzlichen anorganischen Feststoff aus der Gruppe (Oxide, Nitride, Carbide, Silizide.

7. Katalysatorschicht nach einem der Ansprüche 1 bis 5, mit wenigstens einem zusätzlichen Feststoff aus der Gruppe (SiO₂, TiO₂.

8. Verfahren zur Herstellung einer Katalysatorschicht gemäß einem der Ansprüche 1 bis 7 auf einem Substrat mit den Schritten
- eine Mischung aus geträgerten oder ungeträgerten Katalysatorteilchen, Ionomer und zusätzlichem anorganischen Feststoff wird in einem Lösungsmittel suspendiert,
- die Suspension wird auf das Substrat aufgebracht,
- die Suspension wird getrocknet und bildet dabei die Katalysatorschicht aus.

9. Verfahren nach Anspruch 8, bei dem der zusätzliche anorganische Feststoffe in einer Partikelgröße zwischen 0,1 µm und 100 µm, insbesondere einer Partikelgröße zwischen 0,25 µm und 50 µm eingesetzt werden.

10. Verfahren nach einem der Ansprüche 8 bis 9, bei dem als zusätzlicher anorganischer Feststoff wenigstens ein Feststoff aus der Gruppe (Oxid, Nitrid, Carbid, Silizid, Zeolith oder Graphit) eingesetzt werden.

11. Verfahren nach einem der Ansprüche 8 bis 9, bei dem als zusätzlicher anorganischer Feststoff SiO₂ oder TiO₂ oder eine Mischung dieser Verbindungen eingesetzt wird.

12. Verfahren nach einem der vorangehenden Ansprüche 8 bis 11, bei dem der zusätzliche anorganische Feststoff mit einem Gehalt von 10 bis 40 Gew.-% bezogen auf die getrocknete Katalysatorschicht, insbesondere mit einem Gehalt zwischen 15 und 25 Gew.-% eingesetzt wird.

13. Verwendung einer Katalysatorschicht nach einem der Ansprüche 1 bis 7 in einer Niedertemperatur-Brennstoffzelle mit einem Schichtaufbau aus einer Anode, einer ersten Katalysatorschicht, einer Elektrolyt-Membran, einer zweiten Katalysatorschicht und einer Kathode, wobei wenigstens eine Katalysatorschicht gemäß einem der Ansprüche 1 bis 7 als eine erste oder zweite Katalysatorschicht eingesetzt wird.

14. Verwendung einer Katalysatorschicht nach einem der Ansprüche 1 bis 7 in einer Niedertemperatur-Brennstoffzelle mit einem Schichtaufbau aus einer Anode, einer ersten Katalysatorschicht, einer Elektrolyt-Membran, einer zweiten Katalysatorschicht und einer Kathode, wobei eine Katalysatorschicht gemäß einem der Ansprüche 1 bis 7 als erste und zweite Katalysatorschicht eingesetzt wird.

## Claims

1. Catalyst layer, comprising an ion-conducting polymer and pure or supported catalyst particles, **characterised by** additional inorganic solids at least twice as large as the catalyst particles and smaller than the layer thickness of the catalyst layer.

2. Catalyst layer according to preceding claim 1, comprising up to 20 % by weight ion-conducting polymer, 40 to 90 % by weight pure catalyst particles and 10 to 45 % by weight additional inorganic solids.

3. Catalyst layer according to preceding claim 1, comprising 15 to 40 % by weight ion-conducting polymer, 50 to 75 % by weight supported catalyst particles and 10 to 40 % by weight additional inorganic solids.

4. Catalyst layer according to one of claims 1 to 3, comprising an additional inorganic solids content of 15 to 25 % by weight.

5. Catalyst layer according to one of claims 1 to 4, in which the additional inorganic solids have a size of between 0.1 µm and 100 µm, in particular a size of between 0.25 µm and 50 µm.

6. Catalyst layer according to one of claims 1 to 5, with at least one additional inorganic solid from the group consisting of oxides, nitrides, carbides and silicides.

7. Catalyst layer according to one of claims 1 to 5, with at least one additional solid from the group consisting of SiO₂ and TiO₂.

8. Method of producing a catalyst layer according to one of claims 1 to 7 on a substrate, comprising the steps:
- a mixture of supported or unsupported catalyst particles, ionomers and an additional inorganic solid is suspended in a solvent,
- the suspension is applied to the substrate,
- the suspension is dried and the catalyst layer is formed.

9. Method according to claim 8, in which the additional inorganic solids are used in a particle size of between 0.1 µm and 100 µm, in particular in a particle size of between 0.25 µm and 50 µm.

10. Method according to one of claims 8 to 9, in which at least one solid from the group consisting of oxide, nitride, carbide, silicide, zeolite or graphite is used as an additional inorganic solid.

11. Method according to one of claims 8 to 9, in which SiO₂ or TiO₂ or a mixture of these compounds is used as an additional inorganic solid.

12. Method according to one of preceding claims 8 to 11, in which the additional inorganic solid is used in a content of 10 to 40 % by weight in relation to the dried catalyst layer, in particular in a content of between 15 and 25 % by weight.

13. Use of a catalyst layer according to one of claims 1 to 7 in a low-temperature fuel cell having a layer structure consisting of an anode, a first catalyst layer, an electrolyte membrane, a second catalyst layer and a cathode, at least one catalyst layer according to one of claims 1 to 7 being used as a first or second catalyst layer.

14. Use of a catalyst layer according to one of claims 1 to 7 in a low-temperature fuel cell having a layer structure consisting of an anode, a first catalyst layer, an electrolyte membrane, a second catalyst layer and a cathode, a catalyst layer according to one of claims 1 to 7 being used as the first and second catalyst layers.

## Revendications

1. Couche catalytique, comprenant un polymère conduisant les ions et des particules de catalyseur pur ou supporté, **caractérisée par** des solides inorganiques supplémentaires dont la taille est au moins deux fois supérieure à celle des particules de catalyseur et inférieure à l'épaisseur de la couche catalytique.

2. Couche catalytique selon la revendication 1 précédente, comprenant jusqu'à 20 % en poids de polymère conduisant les ions, de 40 à 90 % en poids de particules de catalyseur pur et de 10 à 45 % en poids de solides inorganiques supplémentaires.

3. Couche catalytique selon la revendication 1 précédente, comprenant de 15 à 40 % en poids de polymère conduisant les ions, de 50 à 75 % en poids de particules de catalyseur supporté et de 10 à 40 % en poids de solides inorganiques supplémentaires.

4. Couche catalytique selon l'une des revendications 1 à 3, ayant une teneur en solides inorganiques supplémentaires dans la plage de 15 à 25 % en poids.

5. Couche catalytique selon l'une des revendications 1 à 4, dans laquelle les solides inorganiques supplémentaires ont une taille allant de 0,1 µm à 100 µm, en particulier une taille allant de 0,25 µm à 50 µm.

6. Couche catalytique selon l'une des revendications 1 à 5, comprenant au moins un solide inorganique supplémentaire choisi dans le groupe des oxydes, des nitrures, des carbures et des siliciures.

7. Couche catalytique selon l'une des revendications 1 à 5, comprenant au moins un solide supplémentaire choisi dans le groupe du SiO₂ et du TiO₂.

8. Procédé de fabrication d'une couche catalytique selon l'une des revendications 1 à 7 sur un substrat, comprenant les étapes consistant à :
- mettre en suspension dans un solvant un mélange de particules de catalyseur supporté ou non supporté, d'ionomère et de solide inorganique supplémentaire,
- déposer la suspension sur le substrat,
- sécher la suspension afin de former ainsi la couche catalytique.

9. Procédé selon la revendication 8, dans lequel le solide inorganique supplémentaire est ajouté à une taille de particules allant de 0,1 µm à 100 µm, en particulier à une taille de particules allant de 0,25 µm à 50 µm.

10. Procédé selon l'une des revendications 8 à 9, dans lequel le solide inorganique supplémentaire utilisé est au moins un solide du groupe constitué par des oxydes, des nitrures, des carbures, des siliciures, des zéolites ou le graphite.

11. Procédé selon l'une des revendications 8 à 9, dans lequel le solide inorganique supplémentaire utilisé est le SiO₂ ou le TiO₂ ou un mélange de ces composés.

12. Procédé selon l'une des revendications 8 à 11 précédentes, dans lequel le solide inorganique supplémentaire est utilisé à une teneur allant de 10 à 40 % en poids, en particulier à une teneur allant de 15 à 25 % en poids, ramenée à la couche catalytique séchée.

13. Utilisation d'une couche catalytique selon l'une des revendications 1 à 7 dans une pile à combustible à basse température, comprenant une structure stratifiée constituée d'une anode, d'une première couche catalytique, d'une membrane électrolytique, d'une deuxième couche catalytique et d'une cathode, au moins une couche catalytique selon l'une des revendications 1 à 7 étant utilisée comme première ou comme deuxième couche catalytique.

14. Utilisation d'une couche catalytique selon l'une des revendications 1 à 7 dans une pile à combustible à basse température, comprenant une structure stratifiée constituée d'une anode, d'une première couche catalytique, d'une membrane électrolytique, d'une deuxième couche catalytique et d'une cathode, une couche catalytique selon l'une des revendications 1 à 7 étant utilisée comme première et comme deuxième couche catalytique.
